# FASCICULE DE BREVET EUROPEEN

(11) **EP 2 372 166 B1**
(45) Date de publication et mention de la délivrance du brevet: **13.12.2017**
(21) Numéro de dépôt: 11159180.6
(22) Date de dépôt: 22.03.2011
(51) Int. Cl.: F04D 29/62, F04D 29/66, H02K 5/26

(54) **Groupe moto-ventilateur pour un appareil de chauffage, ventilation et/ou climatisation pour d'un véhicule automobile.**
Motor-Ventilator-Einheit für einer Heizung, Lüftung und/oder Klimaanlage eines Kraftfahrzeuges
Motor ventilator unit for a heating, ventilation and/or air-conditioning device of an automobile

(30) Priorité: 23.03.2010 FR 1001134
(43) Date de publication de la demande: 05.10.2011
(73) Titulaire: VALEO SYSTEMES THERMIQUES, 78321 Le Mesnil St Denis Cedex (FR)
(72) Inventeur: Truillet, Franck, 78322 Le Mesnil Saint-Denis cédex (FR)
(74) Mandataire: Metz, Gaëlle

(56) Documents cités:
- EP-A1- 0 848 477
- EP-A1- 2 081 280
- US-A- 1 932 231
- US-A- 2 294 586
- US-A- 3 229 896
- US-A- 3 775 029
- US-A1- 2006 276 122

## Description

L'invention est du domaine des installations de chauffage, ventilation et/ou climatisation, destinées à équiper un véhicule automobile. L'invention concerne plus particulièrement des appareils de chauffage, ventilation et/ou climatisation aptes à assurer le traitement aérothermique d'un flux d'air destiné à être distribué dans un habitacle du véhicule automobile. L'invention a pour objet un groupe moto-ventilateur comprenant un support moteur destiné à faire partie intégrante d'un groupe moto-ventilateur équipant un tel appareil de chauffage, ventilation et/ou climatisation comme définit dans le préambule de la revendication 1. Un tel groupe moto-ventilateur est connu du document US 1 932 231. Les installations de chauffage, ventilation et/ou climatisation notamment destinées à équiper un véhicule automobile, mettent en oeuvre un ou plusieurs appareils de chauffage, ventilation et/ou climatisation aptes à générer un flux d'air propre à s'écouler à travers des conduits pour la distribution du flux d'air dans un habitacle du véhicule. Les appareils de chauffage, ventilation et/ou climatisation sont notamment constitués d'un groupe moto-ventilateur générant le flux d'air et assemblé sur un boîtier de l'appareil de chauffage, ventilation et/ou climatisation, notamment sur une volute définie dans le boîtier, et conférant au flux d'air une dynamique appropriée.
Le groupe moto-ventilateur est principalement constitué d'un moteur d'entraînement pour la mise en rotation d'une turbine apte à générer le flux d'air sous l'effet de sa mise en rotation. Le groupe moto-ventilateur comprend également un support moteur comportant un logement de réception du moteur d'entraînement et permettant d'assurer le maintien du moteur d'entraînement. A des fins d'assemblage, la face extérieure du support moteur est exploitée pour l'accostage du support moteur sur le boîtier, notamment sur la volute, et un organe d'étanchéité périphérique ménagé sur le support moteur vient en contact avec une surface extérieure du boîtier pour éviter des fuites d'air.

La turbine du groupe moto-ventilateur et les parties tournantes du moteur d'entraînement constituent donc un ensemble tournant autour de son axe de rotation, correspondant généralement à l'axe de rotation du moteur du groupe moto-ventilateur. Or, comme tout élément tournant, il est nécessaire qu'il soit équilibré, c'est-à-dire de faire en sorte que la rotation de cet ensemble n'induise pas d'efforts perpendiculaires à l'axe de rotation.

A titre de rappel, il est définit qu'un solide est dit équilibré lors de sa rotation autour d'un axe de rotation fixe si et seulement si son centre de masse est sur l'axe de rotation et l'axe de rotation est un axe principal d'inertie pour ce solide.

Afin de procéder à l'équilibrage de l'ensemble constitué de la turbine et des parties tournantes du moteur d'entraînement, il est impératif de procéder à une immobilisation parfaite de la paroi extérieure du moteur d'entraînement. Ceci revient à bloquer les degrés de liberté selon toutes les directions, en rotation et en translation. Un tel blocage implique que les forces de maintien soient directement appliquées sur la carcasse extérieure du moteur, avec des surfaces de contact les plus importantes possibles.

Une difficulté à surmonter réside dans l'agencement des moyens nécessaires pour mettre en oeuvre cette étape d'équilibrage.

Il est connu de procéder l'équilibrage alors que la turbine est montée sur le moteur, l'ensemble constitué du moteur et de la turbine n'étant pas encore installé dans le support moteur. Une telle méthode requiert des équipements spéciaux comportant de nombreux composants pour assurer le maintien de l'ensemble constitué du moteur et de la turbine. Ces équipements spéciaux sont donc complexes et onéreux et nécessitent des manipulations supplémentaires inutiles sur ligne d'assemblage.

Une autre méthode consiste à procéder à l'équilibrage alors que la turbine est montée sur le moteur, le moteur étant inséré dans le support moteur. Afin de disposer d'efforts de maintien suffisants, il est nécessaire de définir des espaces importants entre le support moteur et la turbine. Un tel agencement entraîne une perte d'efficacité aéraulique du groupe moto-ventilateur et un accroissement de l'encombrement, dans la direction axiale, du groupe moto-ventilateur.

Enfin, il peut être envisagé de procéder à l'équilibrage alors que la turbine est montée sur le moteur, le moteur étant inséré dans le support moteur, en assurant le maintien directement sur le support moteur. Cette méthode n'est pas fiable car elle génère des erreurs de mesure importantes, ne permettant d'assurer un bon équilibrage.
La présente invention a pour objet un groupe moto-ventilateur permettant de procéder à l'équilibrage de l'ensemble constitué de la turbine et des parties tournantes du moteur d'entraînement qui soit sûr, à faible coût et ne nuit pas aux performances du groupe moto-ventilateur dans un encombrement réduit.
Plus particulièrement, la présente invention concerne un groupe moto-ventilateur selon la revendication 1. En particulier, les ouvertures latérales du support moteur ont une première dimension comprise entre 5mm et 30mm et/ou une deuxième dimension comprise entre 5mm et 30mm.
De plus, selon une alternative de réalisation, le moteur d'entraînement est enserré dans une bague de maintien comprenant une paroi périphérique. Selon cette configuration, la paroi périphérique de la bague de maintien comporte au moins deux passages traversant. Notamment, les passages traversant sont agencés à une distance d'une extrémité axiale supérieure de la bague de maintien comprise entre 5mm et 30mm.

Plus particulièrement, les ouvertures latérales du support moteur et les passages traversant de la bague de maintien sont en coopération afin de permettre une communication directe entre l'extérieur du support moteur et le moteur d'entraînement.

La présente invention a également pour objet un appareil de chauffage, ventilation et/ou climatisation comprenant un boîtier et un groupe moto-ventilateur tel que défini précédemment assemblé sur le boîtier de l'appareil de chauffage, ventilation et/ou climatisation.

Ainsi agencé, le boîtier comporte une paroi additionnelle apte à obturer les ouvertures latérales du support moteur.

D'autres caractéristiques et avantages de l'invention apparaîtront à l'examen de la description qui va suivre en regard des dessins annexés, donnés à titre d'exemples non limitatifs, qui pourront servir à compléter la compréhension de la présente invention et l'exposé de sa réalisation, mais aussi, le cas échéant, contribuer à sa définition sur lesquels:
- la figure 1 est une vue en perspective d'une partie d'un appareil de chauffage, ventilation et/ou climatisation équipé d'un groupe moto-ventilateur selon la présente invention dans lequel la turbine a été ôtée,
- la figure 2 est une vue en perspective d'un groupe moto-ventilateur selon la présente invention dans lequel la turbine a été ôtée,
- la figure 3 est une vue en perspective éclatée d'un support moteur selon la présente invention,
- la figure 4 est une vue en perspective et en coupe selon un plan médian d'un groupe moto-ventilateur selon la présente invention dans lequel la turbine a été ôtée, et
- La figure 5 est une vue en perspective et en coupe selon un plan médian d'une partie de l'appareil de chauffage, ventilation et/ou climatisation équipé d'un groupe moto-ventilateur selon la présente invention dans lequel la turbine a été ôtée.

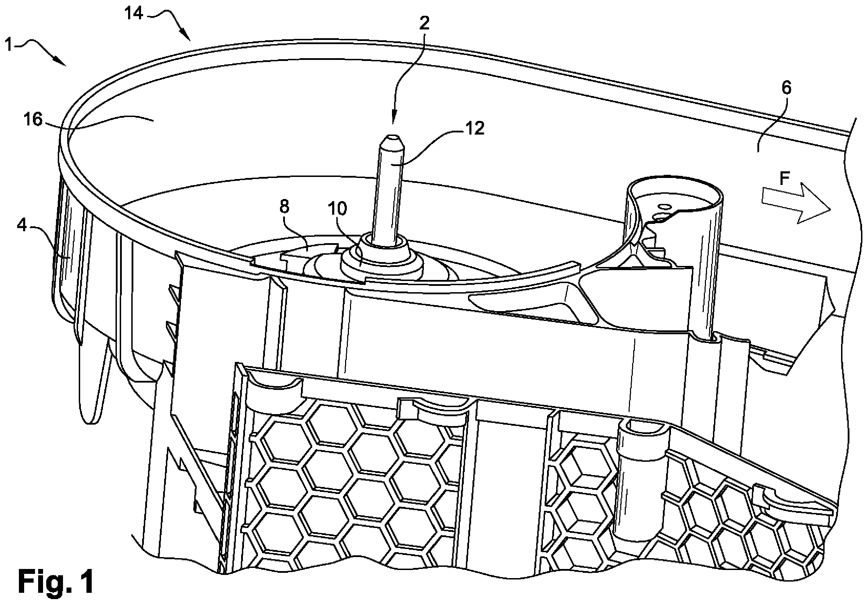

La figure 1 est une vue en perspective d'une partie d'un appareil de chauffage, ventilation et/ou climatisation 1 équipé d'un groupe moto-ventilateur 2. Plus particulièrement, la figure 1 présente une partie d'un appareil de chauffage, ventilation et/ou climatisation 1 destinée à équiper un véhicule automobile et logeant divers éléments contribuant au traitement aérothermique d'un flux d'air F destiné à être distribué dans un habitacle du véhicule. L'appareil de chauffage, ventilation et/ou climatisation 1 est délimité par une paroi 4 définissant un conduit 6 permettant de canaliser le flux d'air F généré par le groupe moto-ventilateur 2.

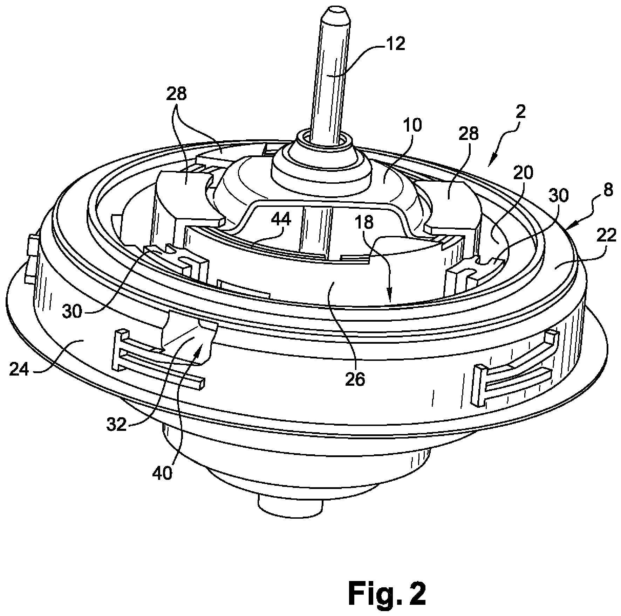

Le groupe moto-ventilateur 2 comprend un moteur d'entraînement 10, visible notamment sur la figure 2, logé dans un support moteur 8. Le moteur d'entraînement 10 est propre à entraîner en rotation une turbine, non représentée sur la figure 1, par l'intermédiaire d'un arbre d'entraînement 12 émergeant hors du moteur d'entraînement 10 pour la réception axiale de la turbine, afin de générer le flux d'air F.

L'appareil de chauffage, ventilation et/ou climatisation 1 comporte un boîtier 14 propre à recevoir le groupe moto-ventilateur 2. Au moins une partie de la paroi 4 du boîtier 14 est conformée afin de former une volute 16. De façon préférentielle, le groupe moto-ventilateur 2 et la volute 16 sont assemblés axialement entre eux.

Sur la figure 1, le groupe moto-ventilateur 2 est assemblé sur la paroi 4 du boîtier 14 formant la volute 16 de telle sorte que la turbine du groupe moto-ventilateur 2 est disposée à l'intérieur de la volute 16.

De plus, l'appareil de chauffage, ventilation et/ou climatisation 1 est susceptible de loger divers organes de traitement aérothermique, tels qu'un évaporateur, un radiateur de chauffage et/ou un radiateur électrique d'appoint, non visibles sur la figure 1.

Selon une variante préférentielle de la présente invention, le support moteur 8 permet le maintien du moteur d'entraînement 10 et est également exploité pour le montage du groupe moto-ventilateur 2 sur le boîtier 14 de l'appareil de chauffage, ventilation et/ou climatisation 1, plus particulièrement sur la paroi 4 du boîtier 14 formant la volute 16.

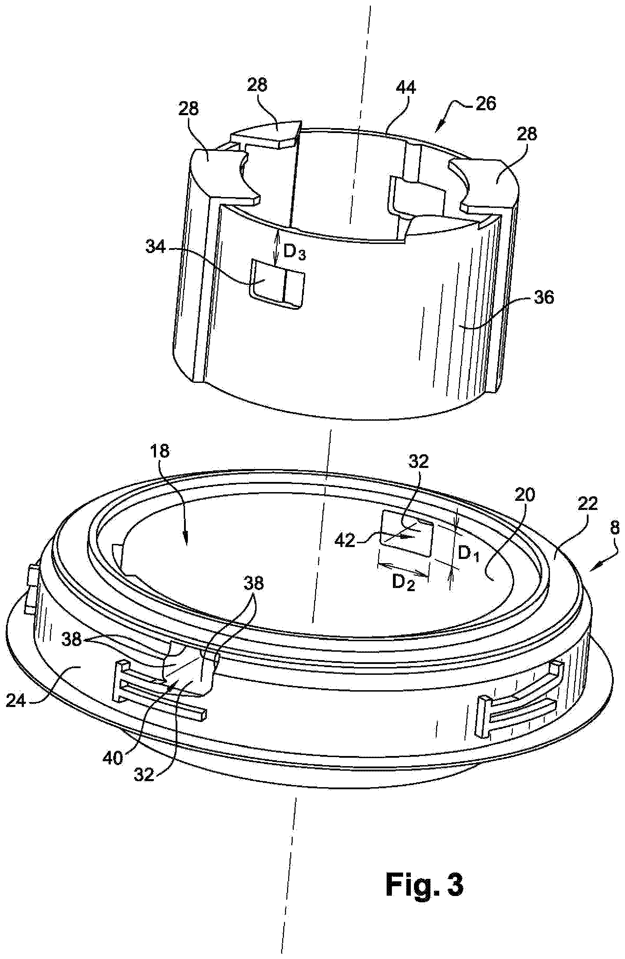

On se réfère dorénavant aux figures 2 et 3 présentant, respectivement, le groupe moto-ventilateur 2 selon une vue en perspective et le support moteur selon une vue en perspective éclatée.

Tel que présenté, le support moteur 8 est de forme complexe prévue pour s'adapter au moteur d'entraînement 10 par l'intermédiaire d'un logement de réception 18. Préférentiellement, le logement de réception 18 est conformé comme un manchon central allongé de forme cylindrique ou autre forme analogue, avantageusement de section sensiblement circulaire. Le logement de réception 18 comporte une paroi intérieure 20 axialement étendue ménageant un évidement intérieur pour la réception axiale du moteur d'entraînement 10. Plus particulièrement, le logement de réception 18 du moteur d'entraînement 10 est défini par la paroi intérieure 20.

Par ailleurs, le support moteur 8 comporte un rebord annulaire supérieur 22 délimitant une extrémité supérieure du logement de réception 18. De plus, le rebord annulaire supérieur 22 entoure l'ouverture du logement de réception 18 du support moteur 8.

Enfin, le support moteur 8 comprend une paroi extérieure formant, au moins en partie, une surface d'accostage 24 pour l'assemblage du support moteur 8 sur le boîtier 14. Plus particulièrement, la surface d'accostage 24 est exploitée pour l'assemblage axial du groupe moto-ventilateur 2 et de la volute 16. La surface d'accostage 24 définit, avec la paroi intérieure 20 du support moteur 8, les limites, dans la direction radiale, du rebord annulaire supérieur 22.

Préférentiellement, la surface d'accostage 24 et la paroi intérieure 20 sont sensiblement cylindriques. Les axes d'évolution de la surface d'accostage 24 et de la paroi intérieure 20 sont parallèles entre eux et/ou confondus, la paroi intérieure 20 étant contenue dans le cylindre portant la surface d'accostage 24. Ainsi définie, il ressort que la surface d'accostage 24 présente un diamètre supérieur au diamètre de la paroi intérieure 20.

Sur l'exemple de réalisation illustré, le support moteur 8 est globalement de conformation cylindrique. Il doit être cependant compris que le support moteur 8 est susceptible d'être de conformation quelconque, s'étendant selon une direction axiale.

Selon un mode particulier de réalisation, le groupe moto-ventilateur 2 comprend également une bague de maintien 26 qui enserre le moteur d'entraînement 10. La bague de maintien 26 comprend une paroi périphérique 36. De plus, des bras de maintien 28 sont agencés sur la paroi périphérique 36 afin de définir l'immobilisation axiale et radiale du moteur d'entraînement 10 à l'intérieur du logement de réception 18 du support moteur 8.

Par ailleurs, le support moteur 8 comporte, notamment sur la paroi intérieure 20, des organes adaptés pour la réception du moteur d'entraînement 10. Le moteur d'entraînement 10 est immobilisé axialement et radialement à l'intérieur du support moteur 8.

En complément, des organes de découplage 30 sont disposés entre la bague de maintien 26 et le support moteur 8. Les organes de découplage 30 constituent tout ou partie des organes adaptés pour la réception du moteur d'entraînement 10. Les organes de découplage 30 permettent de filtrer les fréquences (vibratoires et/ou acoustiques) générées par le moteur d'entraînement 10 et de supprimer la transmission de ces vibrations à l'appareil de chauffage, ventilation et/ou climatisation 1.
Toutefois, la présente invention s'applique également aux groupes moto-ventilateur 2 ne comportant pas de bague de maintien 26 et/ou d'organes de découplage 30. Dans cette configuration, le moteur d'entraînement 10 est directement monté dans le logement de réception 18 du support moteur 8.
Selon la présente invention, et tel que présenté sur les figures 2 et 3, le support moteur 8 comporte des ouvertures latérales 32. Les ouvertures latérales 32 permettent de pouvoir atteindre le moteur d'entraînement 10 depuis l'extérieur du support moteur 8. Plus particulièrement, les ouvertures latérales 32 s'étend dans la direction radiale depuis la surface d'accostage 24 jusqu'à paroi intérieure 20 du support moteur 8.

Avantageusement, les ouvertures latérales 32 sont au moins au nombre de deux. Dans une telle configuration, les deux ouvertures latérales 32 sont, de façon particulièrement avantageuse, agencées de façon diamétralement opposée. Alternativement, les ouvertures latérales 32 sont au nombre de trois et un angle de 120° est formé entre deux ouvertures latérales 32.
Finalement, le nombre d'ouvertures latérales 32 n'est pas limité et peut être supérieur à trois. Le support moteur 8 comporte un nombre N d'ouvertures latérales 32, un angle égal, ou sensiblement égal, à 360° divisé par N est formé entre deux ouvertures latérales 32 consécutives. Dans les agencements de groupe moto-ventilateur 2 comprenant la bague de maintien 26, il est alors prévu des passages traversant 34 réalisés dans la paroi périphérique 36 de la bague de maintien 26. Avantageusement, le nombre de passages traversant 34 réalisés dans la paroi périphérique 36 de la bague de maintien 26 correspond au nombre d'ouvertures latérales 32 réalisées dans le support moteur 8. Ainsi agencés, les ouvertures latérales 32 du support moteur 8 et les passages traversant 34 de la bague de maintien 26 sont en coopération, en particulier en se faisant face, afin de permettre une communication directe entre l'extérieur du support moteur 8 et le moteur d'entraînement 10.

Selon la présente invention, il est possible d'insérer des moyens de maintien à travers les ouvertures latérales 32 et/ou les passages traversant 34 afin d'assurer l'immobilisation du moteur d'entraînement 10, monté dans le support moteur 8, lors des opérations d'équilibrage l'ensemble constitué de la turbine et des parties tournantes du moteur d'entraînement. Par l'intermédiaire de la présente invention, les opérations d'équilibrage peuvent être réalisées de façon fiable et à moindre coût. De plus, ces opérations sont effectuées sans détériorer le support moteur 8 et/ou la bague de maintien 26.

Selon un mode de réalisation privilégié, l'ouverture latérale 32 dans le support moteur 8 se présente sous la forme d'un tunnel comportant une ouverture externe 40, permettant la communication avec l'extérieur du support moteur 8, et une ouverture interne 42, permettant la communication avec l'intérieur du support moteur 8.

Le tunnel formé comporte quatre cloisons 38 format un quadrilatère, en particulier les cloisons étant parallèles deux à deux définissant une section sensiblement en parallélogramme. Selon une variante de réalisation, deux cloisons 38 consécutives sont perpendiculaires entre elles définissant une section sensiblement rectangulaire. Néanmoins, la présente invention n'est pas limitée à une ouverture latérale 32 de section définie selon un quadrilatère. L'ouverture latérale 32 peut également être de section circulaire, polygonale, ...

Selon la présente invention, l'ouverture latérale 32 a une section constante selon la direction radiale. Les ouvertures latérales 32 ont une première dimension D1, ou hauteur D1, définissant la distance entre deux cloisons 38 opposées selon la direction axiale, et une deuxième dimension D2, ou largeur D2, définissant la distance entre deux cloisons 38 opposées selon la direction tangentielle.

Préférentiellement, la hauteur D1 de l'ouverture latérale 32 est comprise entre 5mm et 30mm. De façon complémentaire ou alternative, la largeur D2 de l'ouverture latérale 32 est comprise entre 5mm et 30mm. Avantageusement, l'ouverture latérale 32 est située à une distance comprise entre 2mm et 20mm du rebord annulaire supérieur 22.
Lorsque l'ouverture latérale 32 est de section circulaire, la hauteur D1 est égale à la largeur D2 et correspond au diamètre de l'ouverture latérale 32.

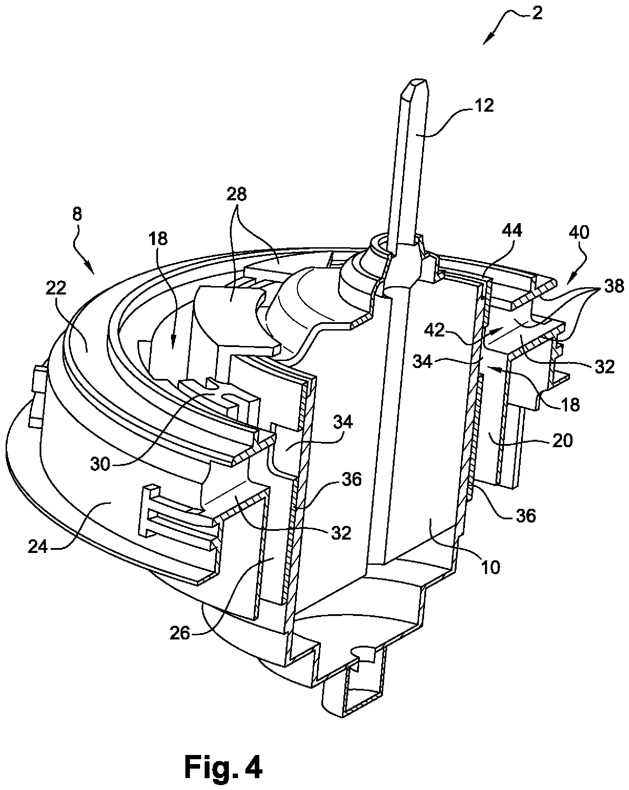

Pour les agencements de groupe moto-ventilateur 2 comprenant la bague de maintien 26, le passage traversant 34 est agencé à une distance D3 d'une extrémité axiale supérieure 44 de la bague de maintien 26. Préférentiellement, la distance D3 entre le passage traversant 34 et l'extrémité axiale supérieure 44 de la bague de maintien 26 est comprise entre 5mm et 30mm. Le plan contenant le centre de gravité de l'ensemble constitué par la turbine et le moteur d'entraînement passe par les ouvertures latérales 32 du support moteur 8 et/ou les passages traversant 34 de la paroi périphérique 36 de la bague de maintien 26.
Le groupe moto-ventilateur 2 est présenté en figure 4 en perspective et en coupe selon un plan médian. La figure 4 présente les détails de la présente invention et permet de percevoir toutes les caractéristiques du support moteur 8 offrant la possibilité de réaliser les opérations d'équilibrage de l'ensemble constitué de la turbine et des parties tournantes du moteur d'entraînement de façon fiable, à moindre coût et sans risque de détérioration du support moteur 8 et/ou la bague de maintien 26.
Un tel groupe moto-ventilateur 2 est destiné à être monté dans l'appareil de chauffage, ventilation et/ou climatisation 1. Plus particulièrement, l'assemblage se fait par mise en coopération de la surface d'accostage 24 avec la paroi 4 du boîtier 14 formant la volute 16.

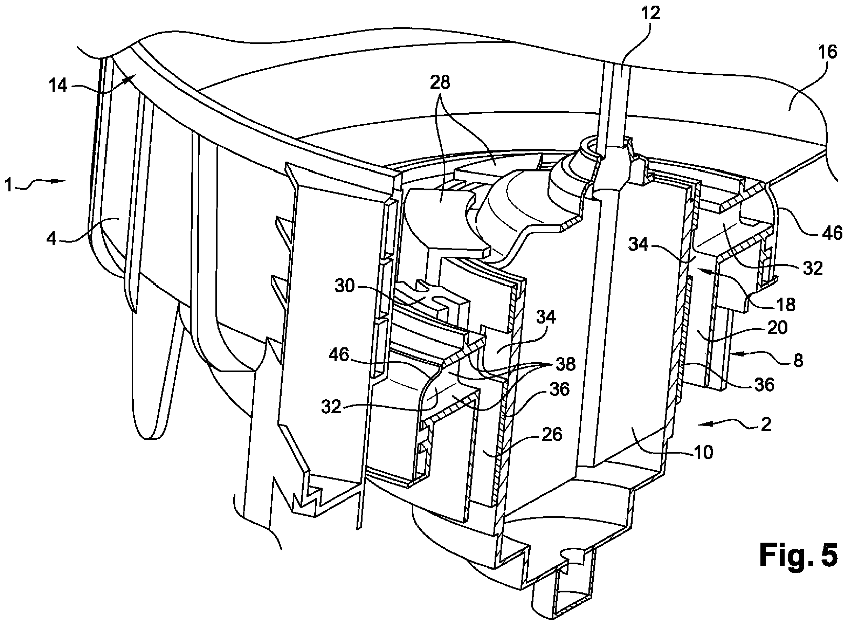

On se réfère dorénavant à la figure 5 qui est une vue en perspective et en coupe selon un plan médian d'une partie de l'appareil de chauffage, ventilation et/ou climatisation équipé du groupe moto-ventilateur 2 selon la présente invention.

Avantageusement, selon la présente invention, le boîtier 14 de l'appareil de chauffage, ventilation et/ou climatisation 1 comporte une paroi additionnelle 46. La paroi additionnelle 46 est apte à venir obturer les ouvertures latérales 32 du support moteur 8.

La paroi additionnelle 46 coopère, par complémentarité de forme, avec les ouvertures latérales 32 du support moteur 8. Par complémentarité de forme, il faut comprendre que la géométrie et la forme de la paroi additionnelle 46 sont telles que le contact entre la paroi additionnelle 46 et les ouvertures latérales 32 du support moteur 8 est réalisé de façon étanche.

Ainsi, lorsque le groupe moto-ventilateur 2 est monté sur le boîtier 14 de l'appareil de chauffage, ventilation et/ou climatisation 1, plus particulièrement sur la paroi 4 du boîtier 14 formant la volute 16, la paroi additionnelle 46 vient se superposer avec l'ouverture latérale 32 du support moteur 8. Un tel agencement permet d'assurer l'étanchéité entre l'intérieur du support moteur 8 et l'intérieur de la volute 16.

Les performances aérauliques du groupe moto-ventilateur 2 ne sont pas détériorées puisque les ouvertures latérales 32 du support moteur 8 ne sont pas la cause de fuites d'air.

Avantageusement, le support moteur 8 et le support moteur 8 sont réalisés par moulage en matière plastique rigide, telle que du polypropylène.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention comme décrit ci-dessous et notamment toutes combinaisons des différents modes de réalisation décrits précédemment.

## Revendications

1. Groupe moto-ventilateur (2) destiné à être assemblé sur un appareil de chauffage, ventilation et/ou climatisation d'un véhicule automobile, ledit groupe moto-ventilateur (2) comprenant :
- un support moteur (8) comportant une paroi intérieure (20) délimitant un logement de réception (18), apte à recevoir un moteur d'entraînement de la turbine du groupe moto-ventilateur, et une paroi extérieure formant au moins en partie une surface d'accostage (24),
- un moteur d'entraînement (10) d'une turbine agencé dans ledit support moteur (8),
- une turbine montée sur ledit moteur d'entrainement (10),
**caractérisé en ce que** le support moteur (8) comprend N ouvertures latérales (32) s'étendant dans une direction radiale depuis la surface d'accostage (24) jusqu'à paroi intérieure (20) du support moteur (8), N étant au moins égal à deux, l'angle formé entre deux ouvertures latérales (32) consécutives étant sensiblement égal à 360° divisé par N,
et **en ce que** le plan contenant le centre de gravité de l'ensemble constitué par la turbine et le moteur d'entrainement (10) passe par lesdites ouvertures latérales (32)

2. Groupe moto-ventilateur (2) selon la revendication 1, **caractérisé en ce que** les ouvertures latérales (32) ont une première dimension (D1) comprise entre 5mm et 30mm.

3. Groupe moto-ventilateur (2) selon la revendication 2, **caractérisé en ce que** les ouvertures latérales (32) ont une deuxième dimension (D2) comprise entre 5mm et 30mm.

4. Groupe moto-ventilateur (2) selon l'une des revendications 1 à 3, **caractérisé en ce que** le moteur d'entraînement (10) est enserré dans une bague de maintien (26) comprenant une paroi périphérique (36).

5. Groupe moto-ventilateur (2) selon la revendication 4, **caractérisé en ce que** la paroi périphérique (36) de la bague de maintien (26) comporte au moins deux passages traversant (34).

6. Groupe moto-ventilateur (2) selon la revendication 5, **caractérisé en ce que** les passages traversant (34) sont agencés à une distance (D3) d'une extrémité axiale supérieure (44) de la bague de maintien (26) comprise entre 5mm et 30mm.

7. Groupe moto-ventilateur (2) selon la revendication 5 ou 6, **caractérisé en ce que** les ouvertures latérales (32) du support moteur (8) et les passages traversant (34) de la bague de maintien (26) sont en coopération afin de permettre une communication directe entre l'extérieur du support moteur (8) et le moteur d'entraînement (10).

8. Appareil de chauffage, ventilation et/ou climatisation (1) comprenant un boîtier (14) **caractérisé en ce qu'**un groupe moto-ventilateur (2) selon l'une des revendications précédentes est assemblé sur le boîtier (14) de l'appareil de chauffage, ventilation et/ou climatisation (1).

9. Appareil de chauffage, ventilation et/ou climatisation (1) selon la revendication 8, **caractérisé en ce que** le boîtier (14) comporte une paroi additionnelle (46) apte à obturer les ouvertures latérales (32) du support moteur (8).

## Patentansprüche

1. Motor-Ventilator-Einheit (2), die dazu bestimmt ist, in ein Heizungs-, Lüftungs- und/oder Klimatisierungsgerät eines Kraftfahrzeugs eingebaut zu werden, wobei die Motor-Ventilator-Einheit (2) enthält:
- einen Motorträger (8), der eine Innenwand (20), die einen Aufnahmesitz (18) begrenzt, welcher einen Antriebsmotor der Turbine der Motor-Ventilator-Einheit aufnehmen kann, und eine Außenwand aufweist, die zumindest zum Teil eine Anlegefläche (24) bildet,
- einen Antriebsmotor (10) einer Turbine, der im Motorträger (8) angeordnet ist,
- eine Turbine, die auf den Antriebsmotor (10) montiert ist,
**dadurch gekennzeichnet, dass** der Motorträger (8) N seitliche Öffnungen (32) enthält, die sich in einer radialen Richtung von der Anlegefläche (24) bis zur Innenwand (20) des Motorträgers (8) erstrecken, wobei N mindestens gleich zwei ist, wobei der zwischen zwei aufeinanderfolgenden seitlichen Öffnungen (32) geformte Winkel im Wesentlichen gleich 360° dividiert durch N ist, und dass die den Schwerpunkt der aus der Turbine und dem Antriebsmotor (10) bestehenden Einheit enthaltende Ebene durch die seitlichen Öffnungen (32) geht.

2. Motor-Ventilator-Einheit (2) nach Anspruch 1, **dadurch gekennzeichnet, dass** die seitlichen Öffnungen (32) eine erste Abmessung (D1) zwischen 5mm und 30mm haben.

3. Motor-Ventilator-Einheit (2) nach Anspruch 2, **dadurch gekennzeichnet, dass** die seitlichen Öffnungen (32) eine zweite Abmessung (D2) zwischen 5mm und 30mm haben.

4. Motor-Ventilator-Einheit (2) nach einem der Ansprüche 1 bis 3, **dadurch gekennzeichnet, dass** der Antriebsmotor (10) in einen Haltering (26) eingespannt ist, der eine Umfangswand (36) enthält.

5. Motor-Ventilator-Einheit (2) nach Anspruch 4, **dadurch gekennzeichnet, dass** die Umfangswand (36) des Halterings (26) mindestens zwei Durchlassdurchgänge (34) aufweist.

6. Motor-Ventilator-Einheit (2) nach Anspruch 5, **dadurch gekennzeichnet, dass** die Durchlassdurchgänge (34) in einem Abstand (D3) von einem oberen axialen Ende (44) des Halterings (26) angeordnet sind, der zwischen 5mm und 30mm liegt.

7. Motor-Ventilator-Einheit (2) nach Anspruch 5 oder 6, **dadurch gekennzeichnet, dass** die seitlichen Öffnungen (32) des Motorträgers (8) und die Durchlassdurchgänge (34) des Halterings (26) zusammenwirken, um eine direkte Verbindung zwischen der Außenumgebung des Motorträgers (8) und dem Antriebsmotor (10) zu ermöglichen.

8. Heizungs-, Lüftungs- und/oder Klimatisierungsgerät (1), das ein Gehäuse (14) enthält, **dadurch gekennzeichnet, dass** eine Motor-Ventilator-Einheit (2) nach einem der vorhergehenden Ansprüche in das Gehäuse (14) des Heizungs-, Lüftungs- und/oder Klimatisierungsgeräts (1) eingebaut ist.

9. Heizungs-, Lüftungs- und/oder Klimatisierungsgerät (1) nach Anspruch 8, **dadurch gekennzeichnet, dass** das Gehäuse (14) eine zusätzliche Wand (46) aufweist, die die seitlichen Öffnungen (32) des Motorträgers (8) verschließen kann.

## Claims

1. Motorized fan unit (2) intended to be assembled on a heating, ventilation and/or air-conditioning device of a motor vehicle, said motorized fan unit (2) comprising:
- a motor mount (8) comprising an inner wall (20) delimiting a reception housing (18) able to receive a motor for driving the turbine of the motorized fan unit, and an outer wall forming at least in part a docking surface (24),
- a motor (10) for driving a turbine, which motor is arranged in said motor mount (8),
- a turbine mounted on said drive motor (10), **characterized in that** the motor mount (8) comprises N lateral openings (32) extending in a radial direction from the docking surface (24) to the inner wall (20) of the motor mount (8), N being at least equal to two, the angle formed between two consecutive lateral openings (32) being substantially equal to 360° divided by N, and **in that** the plane containing the centre of gravity of the assembly formed by the turbine and the drive motor (10) passes through said lateral openings (32).

2. Motorized fan unit (2) according to Claim 1, **characterized in that** the lateral openings (32) have a first dimension (D1) between 5 mm and 30 mm.

3. Motorized fan unit (2) according to Claim 2, **characterized in that** the lateral openings (32) have a second dimension (D2) between 5 mm and 30 mm.

4. Motorized fan unit (2) according to one of Claims 1 to 3, **characterized in that** the drive motor (10) is gripped in a retaining ring (26) comprising a peripheral wall (36).

5. Motorized fan unit (2) according to Claim 4, **characterized in that** the peripheral wall (36) of the retaining ring (26) comprises at least two through-passages (34).

6. Motorized fan unit (2) according to Claim 5, **characterized in that** the through-passages (34) are arranged at a distance (D3) from an upper axial end (44) of the retaining ring (26) that is between 5 mm and 30 mm.

7. Motorized fan unit (2) according to Claim 5 or 6, **characterized in that** the lateral openings (32) of the motor mount (8) and the through-passages (34) of the retaining ring (26) are in cooperation so as to allow a direct communication between the outside of the motor mount (8) and the drive motor (10).

8. Heating, ventilation and/or air-conditioning device (1) comprising a casing (14), **characterized in that** a motorized fan unit (2) according to one of the preceding claims is assembled on the casing (14) of the heating, ventilation and/or air-conditioning device (1).

9. Heating, ventilation and/or air-conditioning device (1) according to Claim 8, **characterized in that** the casing (14) comprises an additional wall (46) able to close off the lateral openings (32) of the motor mount (8).
